# EUROPÄISCHE PATENTSCHRIFT

(11) **EP 3 775 869 B1**
(45) Veröffentlichungstag und Bekanntmachung des Hinweises auf die Patenterteilung: **06.11.2024**
(21) Anmeldenummer: 19723675.5
(22) Anmeldetag: 25.04.2019
(51) Int. Cl.: G01N 29/04, G01N 29/22, G01N 29/265, G01N 29/27, G10K 11/00

(54) **PRÜFVORRICHTUNG UND PRÜFVERFAHREN**
TEST DEVICE AND TEST METHOD
DISPOSITIF DE CONTRÔLE ET PROCÉDÉ DE CONTRÔLE

(30) Priorität: 25.05.2018 DE 102018208293
(43) Veröffentlichungstag der Anmeldung: 17.02.2021
(73) Patentinhaber: Siemens Energy Global GmbH & Co. KG, 81739 München (DE)
(72) Erfinder: OBERMAYR, Stefan, 47199 Duisburg (DE)
(86) Internationale Anmeldenummer: PCT/EP2019/060587
(87) Internationale Veröffentlichungsnummer: WO 2019/223950

(56) Entgegenhaltungen:
- EP-A1- 2 428 650
- WO-A1-2010/026036
- JP-A- 2005 077 320
- JP-B2- 4 049 985
- US-A1- 2015 300 994

## Beschreibung

Die vorliegende Erfindung betrifft eine Prüfvorrichtung zur zerstörungsfreien Prüfung von rotationssymmetrischen Objekten, insbesondere von Rotoren von Gas- oder Dampfturbinen.

Rotoren von Gas- oder Dampfturbinen müssen in regelmäßigen Abständen auf Defekte insbesondere in Form von Rissen überprüft werden. Derartige Risse treten häufig in den am Rotor ausgebildeten Schaufelnuten auf, in denen die Laufschaufeln der Turbine aufgenommen sind. Für die zerstörungsfreie Rissprüfung werden meist Ultraschallsensoren eingesetzt, die als Einkanal- oder Mehrkanal-Ultraschallprüfköpfe (Phased Arrays) ausgebildet sind und Laufzeitbestimmungen durchführen. Für die Prüfung müssen ein oder mehrere Ultraschallprüfköpfe einer Prüfvorrichtung möglichst genau entlang der in den Schaufelnuten des Rotors gehaltenen Schaufelfüße geführt werden, um die Schaufelnuten auf Risse abzutasten.

Für die Durchführung einer Rissprüfung geeignete Prüfvorrichtungen sind in unterschiedlichen Ausgestaltungen bekannt, beispielsweise solche, die neben einem ausgebauten, auf Lagerböcken drehbar angeordneten Rotor positioniert werden. Zur Herbeiführung einer Relativbewegung zwischen der Prüfvorrichtung und dem Rotor wird letzterer gedreht, um den bzw. die Ultraschallköpfe in Umfangsrichtung entlang einer Schaufelnut des Rotors zu bewegen. Die drehbare Lagerung des Rotors auf geeigneten Lagerböcken ist allerdings mit großem Aufwand und entsprechend hohen Kosten verbunden. Alternativ ist es bekannt, eine Prüfvorrichtung als Fahrzeug mit einem Fahrzeugchassis und motorisch angetriebenen Rädern auszulegen. Entsprechend kann das Fahrzeug auf der Umfangsfläche des zu prüfenden Rotors in Umfangsrichtung entlang einer Schaufelnut verfahren werden kann. Ein solches Fahrzeug ist beispielsweise in der EP 2 428 650 B1 beschrieben. Der nötige Halt des Fahrzeugs an dem Rotor wird über Magnete realisiert, die entweder an den Rädern oder an der Unterseite des Fahrzeugchassis vorgesehen sind. Der auf der Umfangsfläche des Rotors zurückgelegte Weg wird vorteilhaft über einen Wegaufnehmer erfasst, so dass den von den Ultraschallprüfköpfen erfassten Messwerte Umfangspositionen am Rotor zugeordnet werden können. Ein Nachteil des in der EP 2 428 650 B1 beschriebenen Fahrzeugs besteht allerdings darin, dass dessen Aufbau recht komplex und damit teuer ist. Weiterhin nachteilig ist das relativ hohe Eigengewicht. Zum einen erschwert es den Transport der Prüfvorrichtung. Zum anderen müssen die Magnete hohe Kräfte erzeugen, um das Fahrzeug auch über Kopf sicher an dem Rotor halten zu können.

WO 2010/026036 A1 offenbart ein Ultraschallprüfkopf zum Prüfen von einem Prüfgegenstand mittels der Ultraschallprüftechnik, wobei zwischen einer Ultraschallprüfkopffläche und einer zu prüfenden Oberfläche ein Koppelmittel angeordnet ist und der Ultraschallprüfkopf eine Prüfkopfhalterung aufweist, die derart ausgebildet ist, dass ein Ausströmen des Koppelmittels verhindert ist.

Ausgehend von diesem Stand der Technik ist es eine Aufgabe der vorliegenden Erfindung, eine Prüfvorrichtung der eingangs genannten Art mit alternativem, einfachem und preiswertem Aufbau zu schaffen.

Zur Lösung dieser Aufgabe schafft die vorliegende Erfindung eine Prüfvorrichtung der eingangs genannten Art, die dadurch gekennzeichnet, dass diese wenigstens drei längliche, sich in einer Umfangsrichtung und parallel zueinander erstreckende sowie miteinander verbundene Kufenkörper aufweist, die Auflageflächen zum Aufstellen auf der Umfangsfläche des zu prüfenden Objekts definieren, wobei zumindest am mittleren Kufenkörper eine Prüfkopfaufnahme für einen Ultraschallprüfkopf vorgesehen ist. Zur Durchführung einer zerstörungsfreien Prüfung werden die Kufenkörper mit ihren Auflageflächen auf die Umfangsfläche des Rotors aufgesetzt, woraufhin ein an der Prüfkopfaufnahme angeordneter Ultraschallprüfkopf Messungen zur Erfassung von Rissen durchführen kann. Die Relativbewegung zwischen der Prüfvorrichtung bzw. dem an dieser gehaltenen Ultraschallprüfkopf und dem Rotor kann durch manuelles Schieben der Kufenkörper entlang der Rotorumfangsfläche erfolgen. Alternativ ist es auch möglich, die Prüfvorrichtung in einer tangentialen Position relativ zur Rotorumfangsfläche zu fixieren und den Rotor zu drehen. Letztere Variante wird insbesondere dann eingesetzt, wenn der Rotor zur Durchführung anderer Wartungs- oder Reparaturarbeiten bereits auf entsprechenden Lagerböcken drehbar gelagert ist, so dass diesbezüglich weder zusätzlicher Aufwand noch zusätzliche Kosten entstehen.

Die erfindungsgemäße Prüfvorrichtung zeichnet sich durch ihren besonders einfachen Aufbau und ihr geringes Eigengewicht aus. Dank der Kufenkörper wird eine gegenüber Rädern große Auflagefläche bereitgestellt, so dass die Prüfvorrichtung problemlos mit hoher Genauigkeit über die Rotorumfangsfläche geführt werden kann.

Gemäß einer Ausgestaltung der vorliegenden Erfindung sind die wenigstens drei Kufenkörper über zumindest zwei sich parallel zueinander in einer axialen Richtung erstreckende Führungsstangen miteinander verbunden, an denen die Kufenkörper in axialer Richtung verschiebbar und an beliebiger Position arretierbar gehalten sind. Dank dieses Aufbaus kann der Abstand zwischen den Kufenkörpern in einfacher Weise verändert werden, um die Prüfvorrichtung an unterschiedlich gestaltete Rotorumfangsflächen anpassen zu können. Der radiale Abstand zwischen den Auflageflächen der Kufenkörper und den Führungsstangen beträgt bevorzugt mindestens 12mm, besser noch mindestens 20mm, um von der Rotorumfangsfläche radial vorstehende Vorsprünge, die beispielsweise durch in Umfangsrichtung umlaufende Dichtbänder gebildet werden, mit hinreichendem Spiel überfahren zu können. Ein weiterer Vorteil der Anordnung des Kufenkörpers an den beiden Führungsstangen besteht darin, dass sich die Kufenkörper in einfacher Weise austauschen lassen. So können für jede Axialposition eines Rotors stets optimal geformte Kufenkörper verwendet werden.

Vorteilhaft sind in den Kufenkörpern die Führungsstangen aufnehmende Durchgangslöcher ausgebildet, wodurch ein sehr einfacher Aufbau erzielt wird. In jedes Durchgangsloch mündet bevorzugt eine von außen zugängliche Gewindebohrung zur Aufnahme einer Madenschraube, die zur Befestigung eines Kufenkörpers in gewünschter Position dient.

Die Auflageflächen der Kufenkörper sind vorteilhaft ringsegmentförmig ausgebildet, wobei der Radius des Ringsegments im Wesentlichen dem Außenradius des Rotors an derjenigen Position entspricht, an welcher der entsprechende Kufenkörper auf den Rotor aufgesetzt werden soll. Auf diese Weise wird ein flächiger und damit sehr guter Kontakt zwischen den Kufenkörpern und dem Rotor erzeugt. Alternativ können die Auflageflächen der Kufenkörper auch prismaartig ausgebildet sein, so dass pro Kufenkörper zwei Linienkontakte zum Rotor realisiert werden. Zwar wird auf diese Weise die Kontaktfläche zwischen Kufenkörper und Rotor verringert. Die Kufenkörper können aber auf unterschiedliche Außendurchmesser des Rotors aufgesetzt werden, was der flexiblen Einsetzbarkeit der Kufenkörper zuträglich ist.

Bevorzugt ist die Prüfkopfaufnahme des mittleren Kufenkörpers in Form einer sich ausgehend von dessen Auflagefläche radial aufwärts erstreckenden Aufnahmebohrung vorgesehen, in die insbesondere eine von außen zugängliche Gewindebohrung zur Aufnahme einer Klemmschraube mündet. Dank einer solchen Aufnahmebohrung lässt sich der Prüfkopf problemlos montieren und über die Klemmschraube befestigen.

Vorteilhaft mündet in die Auflagefläche des mittleren Kufenkörpers benachbart zur Prüfkopfaufnahme eine Austrittsöffnung eines Koppelmittelzuführkanals, wobei die Eintrittsöffnung des Koppelmittelzuführkanals bevorzugt an der Oberseite des mittleren Kufenkörpers vorgesehen und insbesondere mit einem Innengewinde zum Anschließen einer Koppelmittelzuführleitung ausgebildet ist. Die automatische Zufuhr eines Koppelmittels während der Durchführung einer Messung erleichtert die Handhabung der Prüfvorrichtung.

Gemäß einer Ausgestaltung der vorliegenden Erfindung weist zumindest einer der beiden äußeren Kufenkörper im unteren Bereich seiner zu den anderen Kufenkörpern weisenden Seite eine sich in Umfangsrichtung durchgehend erstreckende Ausnehmung in Form einer zweiseitig offenen Nut auf, deren zu den anderen Kufenkörpern weisende Wandung eine Anlagefläche zur Anlage an einen radial vorstehenden Absatz des zu prüfenden Objektes definiert. Damit werden Halt und Führung der Prüfvorrichtung an dem zu prüfenden Objekt verbessert.

Bevorzugt weist zumindest einer der beiden äußeren Kufenkörper eine weitere Prüfkopfaufnahme insbesondere in Form einer sich ausgehend von dessen Auflagefläche radial aufwärts erstreckenden Aufnahmebohrung auf, in die bevorzugt eine von außen zugängliche Gewindebohrung zur Aufnahme einer Klemmschraube mündet. Durch das Vorsehen mehrerer Prüfköpfe kann die Genauigkeit der Messungen deutlich verbessert werden. Der zweite Prüfkopf kann dabei eine geringere Leistung und/oder Empfindlichkeit als der erste Prüfkopf aufweisen, der an dem mittleren Kufenkörper angeordnet ist.

Vorteilhaft sind an der Auflagefläche und/oder an der Anlagefläche zumindest eines äußeren Kufenkörpers Magnete angeordnet, die insbesondere in Magnetaufnahmebohrungen eingelassen sind. Dank solcher Magnete werden die Kufenkörper nach dem Aufsetzen auf den Rotor sicher an diesem gehalten, sodass ein manuelles Andrücken entfallen kann.

Die Kufenkörper sind bevorzugt aus einem Kunststoffmaterial, insbesondere unter Einsatz eines additiven Fertigungsverfahrens hergestellt, wie beispielsweise das Photopolimerisationsverfahren. So lassen sich unterschiedliche Kurvenkörper einfach, schnell und preiswert für verschiedenste geometrische Bedingungen am Rotor herstellen.

Gemäß einer Ausgestaltung der vorliegenden Erfindung weist die Prüfvorrichtung einen Wegaufnehmer auf, um den von dem oder den Prüfköpfen erfassten Messwerten Umfangspositionen am Rotor zuordnen zu können.

Der Wegaufnehmer umfasst bevorzugt ein Magnetrad, das derart positionierbar ist, dass es auf der Umfangsfläche des zu prüfenden Objekts in Umfangsrichtung abrollt, wobei der Durchmesser und die Befestigung des Magnetrads vorteilhaft derart gewählt sind, dass ein Radialspiel von mindestens 12mm belassen wird, um von der Rotorumfangsfläche radial vorstehende Vorsprünge, die beispielsweise durch in Umfangsrichtung umlaufende Dichtbänder gebildet werden, mit hinreichendem Spiel überfahren zu können.

Das Magnetrad ist bevorzugt drehbar an einem axial verschiebbar und in beliebiger Position arretierbar an einer der zuvor beschriebenen Führungsstangen befestigten, sich in Umfangsrichtung erstreckenden Haltearm positioniert. Auf diese Weise wird ein einfacher und preiswerter Aufbau erzielt.

Vorteilhaft ist eine Halteeinrichtung vorgesehen, die zur Aufnahme eines Fixierelementes zur Fixierung der Prüfvorrichtung in einer Position tangential zum zu prüfenden Objekt ausgelegt ist. Ein solches Fixierelement, das beispielsweise die Form einer Haltestange aufweisen und selbst wiederum an einem ortsfest angeordneten Stativ gehalten sein kann, kommt dann zum Einsatz, wenn die Relativbewegung zwischen dem zumindest einen Prüfkopf der Prüfvorrichtung und dem zu prüfenden Rotor durch Drehen des Rotors realisiert wird.

Ferner schafft die vorliegende Erfindung ein Verfahren zur zerstörungsfreien Prüfung von rotationssymmetrischen Objekten, insbesondere von Rotoren von Gas- oder Dampfturbinen unter Verwendung einer erfindungsgemäßen Prüfvorrichtung.

Weitere Merkmale und Vorteile der erfindungsgemäßen Prüfvorrichtung werden anhand der nachfolgenden Beschreibung einer Prüfvorrichtung gemäß einer Ausführungsform der vorliegenden Erfindung unter Bezugnahme auf die beiliegende Zeichnung deutlich.

Darin ist
- Figur 1: perspektivische Ansicht einer Prüfvorrichtung gemäß einer Ausführungsform der vorliegenden Erfindung, die auf einen zu prüfenden Rotor einer Turbine aufgesetzt ist, wobei zur besseren Darstellung nur ein Teilstück des Rotors dargestellt ist;

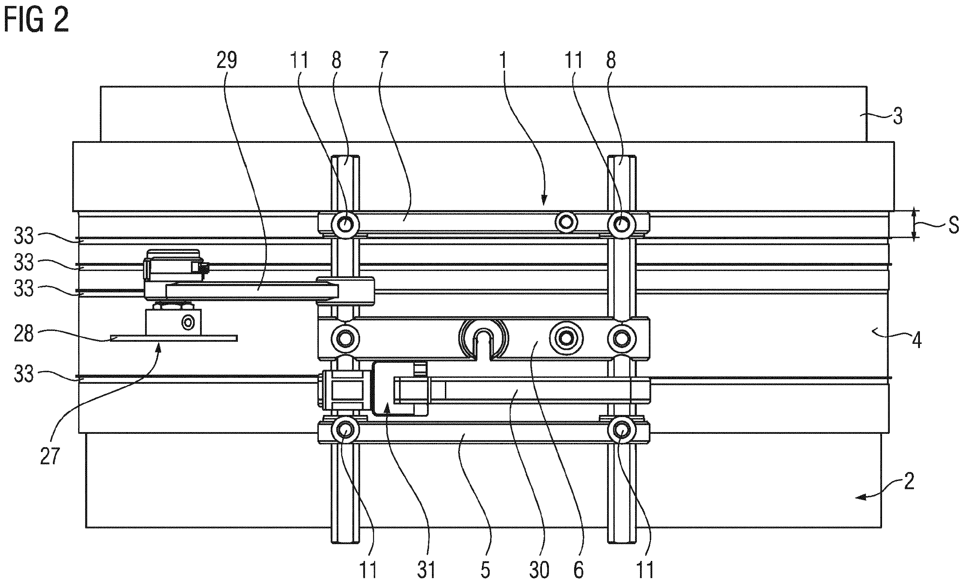

- Figur 2: eine Draufsicht der in Figur 1 dargestellten Anordnung;

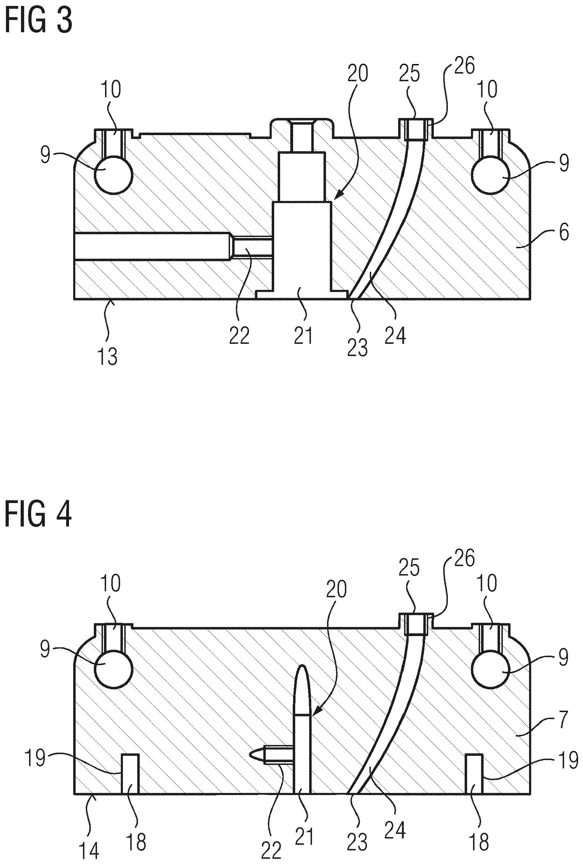

- Figur 3: eine Seitenansicht eines mittleren Kufenkörpers der in Figur 1 dargestellten Prüfvorrichtung und
- Figur 4: eine Seitenansicht eines äußeren Kufenkörpers der in Figur 1 dargestellten Prüfvorrichtung.

Gleiche Bezugsziffern beziehen sich nachfolgend auf gleiche bzw. gleichartig ausgebildete Komponenten.

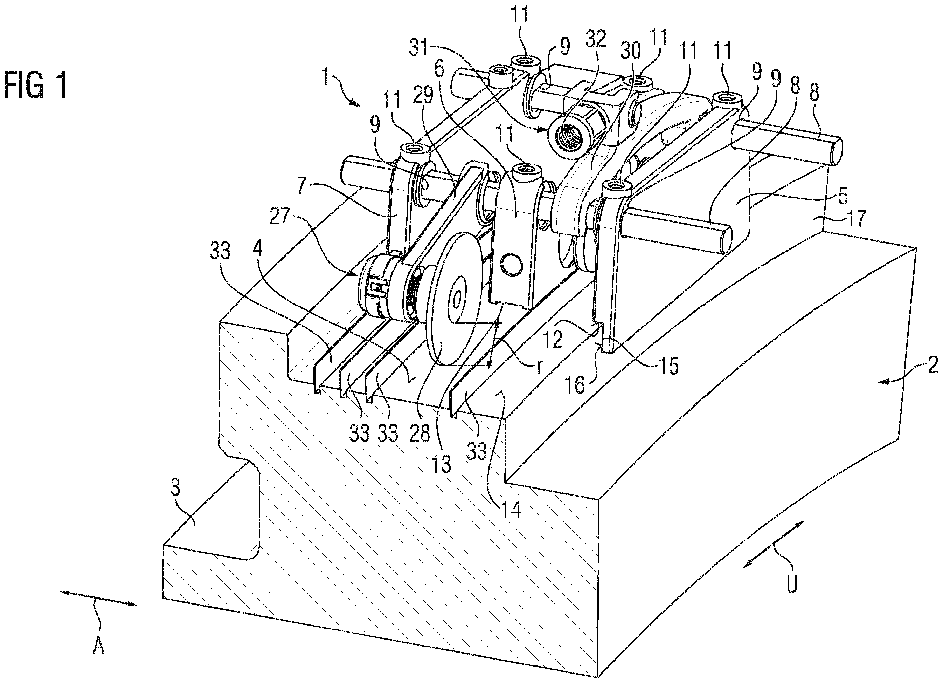

Die Prüfvorrichtung 1 dient zur zerstörungsfreien Prüfung von rotationssymmetrischen Objekten, insbesondere von Rotoren 2 von Gas- oder Dampfturbinen. Genauer gesagt dient die Prüfvorrichtung 1 zur Erfassung von Rissen im Bereich von Laufschaufeln aufnehmenden Schaufelnuten 3 des Rotors 2. Die nachfolgend genannten Richtungsangaben beziehen sich auf die in Figur 1 dargestellte Anordnung, bei der die Prüfvorrichtung 1 auf eine Umfangsfläche 4 des Rotors 2 aufgesetzt ist.

Die Prüfvorrichtung 1 umfasst vorliegend drei längliche, sich in einer Umfangsrichtung U und parallel zueinander erstreckende Kufenkörper 5, 6 und 7, die jeweils plattenförmig ausgebildet sind. Die Plattenstärke S zumindest der äußeren beiden Kufenkörper 5 und 7 liegt bevorzugt im Bereich zwischen 5 und 10 mm, wohingegen die Plattenstärke S des mittleren Kufenkörpers 6 bevorzugt größer als die der anderen beiden Kufenkörper 5 und 7 gewählt ist. Die drei Kufenkörper 5, 6 und 7 sind über zwei sich parallel zueinander in einer axialen Richtung A erstreckende Führungsstangen 8 derart miteinander verbunden, dass die Kufenkörper 5, 6 und 7 in axialer Richtung A verschiebbar und an beliebiger Position arretierbar an den Führungsstangen 8 gehalten sind. Die Kufenkörper 5, 6 und 7 sind hierzu mit die Führungsstangen 8 aufnehmenden Durchgangslöchern 9 versehen, die jeweils im oberen Bereich der Kufenkörper 5, 6 und 7 ausgebildet sind. In jedes der Durchgangslöcher 9 mündet eine von außen zugängliche Gewindebohrung 10 zur Aufnahme einer Madenschraube 11. Nach dem Lösen der Madenschrauben 11 können die Kufenkörper 5, 6 und 7 entsprechend frei in axialer Richtung A entlang der Führungsstangen 8 verschoben und dann nach Erreichen einer gewünschten Position durch Festziehen der Madenschrauben 11 fixiert werden. Die Kufenkörper 5, 6 und 7 definieren im unteren Bereich jeweils Auflageflächen 12, 13 und 14 zum Aufstellen auf der Umfangsfläche 4 des Rotors 2. Vorliegend sind die Auflageflächen 12, 13 und 14 jeweils ringsegmentförmig ausgebildet, wobei der Durchmesser des Ringsegments dem Außendurchmesser des Rotors 2 an derjenigen Position entspricht, an welcher der entsprechende Kufenkörper 5, 6 bzw. 7 auf der Umfangsfläche 4 des Rotors 2 positioniert werden soll. Alternativ ist es allerdings auch möglich, die Auflageflächen 12, 13 und 14 prismaartig auszubilden, so dass die Auflageflächen 12, 13 und 14 auch problemlos auf unterschiedliche Außendurchmesser des Rotors 2 aufgesetzt werden können.

Der vordere äußere Kufenkörper 5 weist im unteren Bereich seiner zu den anderen Kufenkörpern 6 und 7 weisenden Seite eine sich in Umfangsrichtung U durchgehend erstreckende Ausnehmung 15 in Form einer zweiseitig offenen Nut auf, deren zu den anderen Kufenkörpern 6 und 7 weisende Wandung eine Anlagefläche 16 zur Anlage an einen radial vorstehenden Absatz 17 des Rotors 2 definiert. Ferner sind an der Auflagefläche 12 sowie an der Anlagefläche 16 des vorderen äußeren Kufenkörpers 5 Magnete 18 angeordnet, die in entsprechende Magnetaufnahmebohrungen 19 eingelassen sind.

Der mittlere Kufenkörper 6 umfasst eine etwa mittig angeordnete Prüfkopfaufnahme 20 in Form einer sich ausgehend von dessen Auflagefläche 13 radial aufwärts erstreckenden Aufnahmebohrung 21, in die eine sich vorliegend quer zu Umfangsrichtung U erstreckende, von außen zugängliche Gewindebohrung 22 zur Aufnahme einer Klemmschraube mündet. Die Prüfkopfaufnahme 20 dient dazu, einen vorliegend nicht näher dargestellten Ultraschallprüfkopf aufzunehmen, bei dem es sich vorteilhaft um einen Mehrkanal-Ultraschallprüfkopf handelt. In die Auflagefläche 13 des mittleren Kufenkörpers 6 mündet benachbart zur Prüfkopfaufnahme 20 eine Austrittsöffnung 23 eines Koppelmittelzuführkanals 24, wobei die Eintrittsöffnung 25 des Koppelmittelzuführkanals 23 an der Oberseite des mittleren Kufenkörpers 6 vorgesehen und mit einem Innengewinde 26 ausgebildet ist, um eine nicht näher dargestellte Koppelmittelzuführleitung anschließen zu können.

Der hintere äußere Kufenkörper 7, der im auf einen Rotor 2 aufgesetzten Zustand der Prüfvorrichtung 1 zur Schaufelnut 3 weisend angeordnet wird, ist ebenfalls mit einer Prüfkopfaufnahme 20 in Form einer sich ausgehend von dessen Auflagefläche 14 radial aufwärts erstreckenden Aufnahmebohrung 21 versehen, in die eine von außen zugängliche Gewindebohrung 22 zur Aufnahme einer Klemmschraube mündet. Die Prüfkopfaufnahme 20 des hinteren äußeren Kufenkörpers 7 ist etwas kleiner als die des mittleren Kufenkörpers 6, da der aufzunehmende Ultraschallprüfkopf ebenfalls kleinere Außenabmessungen aufweist. Analog zum mittleren Kufenkörper 6 mündet auch beim Kufenkörper 7 die Austrittsöffnung 23 eines Koppelmittelzuführkanals 24 benachbart zur Aufnahmebohrung 21 in die Auflagefläche 14. Ferner ist auch der hintere äußere Kufenkörper 7 analog zum vorderen äußeren Kufenkörper 5 mit in Magnetaufnahmebohrungen 19 eingelassenen, etwa bündig mit der Auflagefläche 14 abschließenden Magneten 18 versehen. Auch wenn dies vorliegend nicht der Fall ist, kann der hintere äußere Kufenkörper 7 analog zum vorderen äußeren Kufenkörper 5 mit einer zu den anderen Kufenkörpers 5 und 6 weisenden Anlagefläche 16 versehen sein, wenn dies der Positionierung der Prüfvorrichtung 1 auf dem Rotor 2 zuträglich ist.

Die Prüfvorrichtung 1 umfasst ferner einen Wegaufnehmer 27 mit einem Magnetrad 28, das derart positionierbar ist, dass es auf der Umfangsfläche 4 des Rotors 2 abrollt, wobei der Durchmesser und die Befestigung des Magnetrads 28 derart gewählt sind, dass ein Radialspiel r von mindestens 12 mm belassen wird. Das Magnetrad 28 ist vorliegend drehbar an einem axial verschiebbar und in beliebiger Position arretierbar an einer der Führungsstangen 8 befestigten, sich in Umfangsrichtung U erstreckenden Halterarm 29 positioniert. Entsprechend ist das Magnetrad 28 in Umfangsrichtung U beabstandet zu den Kufenkörpern 5, 6 und 7 positioniert.

Bei der vorliegenden Ausführungsform sind die Führungsstangen 8 über eine bügelartig ausgebildete Verbindungsstange 30 aneinander befestigt. An der Verbindungsstange 30 ist eine Halteeinrichtung 31 vorgesehen, die zur Aufnahme eines Fixierelementes zur Fixierung der Prüfvorrichtung 1 in einer Position tangential zum Rotor 2 ausgelegt ist. Die Halteeinrichtung 31 ist schwenkbar um eine sich axial erstreckende Schwenkachse an der Verbindungsstange 30 gehalten und definiert ein Innengewinde 32, in das ein passendes Außengewinde des nicht näher dargestellten Fixierelementes eingeschraubt werden kann, das beispielsweise in Form einer Haltestange ausgebildet und zur Fixierung an einem ortsfest aufstellbaren Stativ ausgelegt ist.

Zur zerstörungsfreien Prüfung des Rotors 2 im Hinblick auf eine Rissbildung im Bereich einer Schaufelnut 3 wird die Prüfvorrichtung 1 gemäß Figur 1 derart auf die Umfangsfläche 4 des Rotors 2 aufgesetzt, dass die Kufenkörper 5, 6 und 7 in Umfangsrichtung U weisen. Dabei ist darauf zu achten, dass der hintere äußere Kufenkörper 7 der Schaufelnut 3 zugewandt ist. Die jeweiligen Abstände zwischen den Kufenkörpern 5, 6 und 7 sind oder werden derart eingestellt, dass der hintere äußere Kufenkörper 5 und der mittlere Kufenkörper 6 zwischen durch radial vorstehende Dichtbänder 32 gebildete Vorsprünge greifen und die Anlagefläche 16 von außen an dem Absatz 17 des Rotors 2 anliegt. Die Magnete 18 halten die Kufenkörper 5, 6 und 7 nunmehr fest am Rotor 2. Anschließend wird das Magnetrad 28 auf die Umfangsfläche 4 des Rotors 2 aufgesetzt. Der Abstand a ebenso wie das Radialspiel r sind derart gewählt, dass keine unerwünschte Kollision der Prüfvorrichtung 1 mit radial aufwärts vorstehenden Dichtbändern 33 des Rotors 2 stattfindet.

In einem weiteren Schritt wird die so positionierte Prüfvorrichtung 1 in Umfangsrichtung U relativ zur Schaufelnut 3 bewegt, um unter Einsatz der Ultraschallprüfköpfe die üblichen Messungen durchzuführen, wobei kontinuierlich Koppelmittel über die Koppelmittelzuführkanäle 24 zugeführt wird. Während dieser Bewegung nimmt der Wegaufnehmer 27 den zurückgelegten Weg auf, so dass den erfassten Messwerten entsprechende Umfangspositionen des Rotors 2 zugeordnet werden können.

Die Relativbewegung zwischen der Prüfvorrichtung 1 und dem Rotor 2 erfolgt bei stillstehendem Rotor 2 durch manuelles Verschieben der Prüfvorrichtung 1 über die Umfangsfläche 4 des Rotors 2. Alternativ kann die Prüfvorrichtung 1 unter Einsatz der Halteinrichtung 31 in der in Figur 1 dargestellten tangentialen Position fixiert werden. Hierzu wird ein geeignetes Fixierelement an der Halteeinrichtung 31 aufgenommen, wobei das Fixierelement wiederrum ortsfest befestigt wird, beispielsweise an einem Stativ. Die Relativbewegung wird dann durch Drehen des Rotors 2 realisiert.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Prüfvorrichtung (1)
zur zerstörungsfreien Prüfung von rotationssymmetrischen Objekten,
insbesondere von Rotoren (2) von Gas- oder Dampfturbinen, wobei die rotationssymmetrischen Objekte in einer Umfangsrichtung (U) drehbar sind und
sich senkrecht zur Umfangsrichtung (U) in einer axialen Richtung (A) ausdehnen,
**dadurch gekennzeichnet, dass**
diese wenigstens drei längliche, sich in einer Umfangsrichtung (U) und
parallel zueinander erstreckende sowie miteinander verbundene Kufenkörper (5, 6, 7) aufweist,
die Auflageflächen zum Aufstellen auf der Umfangsfläche (4) des zu prüfenden Objekts definieren,
wobei zumindest am mittleren Kufenkörper (6) eine Prüfkopfaufnahme (20) für einen Ultraschallprüfkopf vorgesehen ist.

2. Prüfvorrichtung (1) nach Anspruch 1,
**dadurch gekennzeichnet, dass**
die wenigstens drei Kufenkörper (5, 6, 7) über zumindest zwei sich parallel zueinander in einer axialen Richtung erstreckende Führungsstangen (8) miteinander verbunden sind, an denen die Kufenkörper (5, 6, 7) in axialer Richtung (A) verschiebbar und an beliebiger Position arretierbar gehalten sind,
wobei der radiale Abstand (a) zwischen den Auflageflächen (12, 13, 14) der Kufenkörper (5, 6, 7) und den Führungsstangen (8) bevorzugt mindestens 12mm beträgt, besser noch mindestens 20mm.

3. Prüfvorrichtung (1) nach Anspruch 2,
**dadurch gekennzeichnet, dass**
in den Kufenkörpern (5, 6, 7) die Führungsstangen (8) aufnehmende Durchgangslöcher (9) ausgebildet sind, in die jeweils eine von außen zugängliche Gewindebohrung (10) zur Aufnahme einer Madenschraube (11) mündet.

4. Prüfvorrichtung (1) nach einem der vorhergehenden Ansprüche,
**dadurch gekennzeichnet, dass**
die Auflageflächen (12, 13, 14) ringsegmentförmig oder prismaartig ausgebildet sind.

5. Prüfvorrichtung (1) nach einem der vorhergehenden Ansprüche,
**dadurch gekennzeichnet, dass**
die Prüfkopfaufnahme (20) des mittleren Kufenkörpers (6) in Form einer sich ausgehend von dessen Auflagefläche (13) radial aufwärts erstreckenden Aufnahmebohrung (21) vorgesehen ist, in die insbesondere eine von außen zugängliche Gewindebohrung (22) zur Aufnahme einer Klemmschraube mündet.

6. Prüfvorrichtung (1) nach einem der vorhergehenden Ansprüche,
**dadurch gekennzeichnet, dass**
in die Auflagefläche (13) des mittleren Kufenkörpers (6) benachbart zur Prüfkopfaufnahme (20) eine Austrittsöffnung (23) eines Koppelmittelzuführkanals (24) mündet,
wobei die Eintrittsöffnung (25) des Koppelmittelzuführkanals (24) bevorzugt an der Oberseite des mittleren Kufenkörpers (6) vorgesehen und insbesondere mit einem Innengewinde (26) ausgebildet ist.

7. Prüfvorrichtung (1) nach einem der vorhergehenden Ansprüche,
**dadurch gekennzeichnet, dass**
zumindest einer der beiden äußeren Kufenkörper (5, 7) im unteren Bereich seiner zu den anderen Kufenkörpern weisenden Seite eine sich in Umfangsrichtung (U) durchgehend erstreckende Ausnehmung (15) in Form einer zweiseitig offenen Nut aufweist, deren zu den anderen Kufenkörpern weisende Wandung eine Anlagefläche (16) zur Anlage an einen radial vorstehenden Absatz (17) des zu prüfenden Objektes definiert.

8. Prüfvorrichtung (1) nach einem der vorhergehenden Ansprüche,
**dadurch gekennzeichnet, dass**
zumindest einer der beiden äußeren Kufenkörper (5, 7) eine weitere Prüfkopfaufnahme (20) insbesondere in Form einer sich ausgehend von dessen Auflagefläche (12, 14) radial aufwärts erstreckenden Aufnahmebohrung (21) aufweist, in die bevorzugt eine von außen zugängliche Gewindebohrung (22) zur Aufnahme einer Klemmschraube mündet.

9. Prüfvorrichtung (1) nach einem der vorhergehenden Ansprüche,
**dadurch gekennzeichnet, dass**
an der Auflagefläche (12, 14) und/oder an der Anlagefläche (16) zumindest eines äußeren Kufenkörpers (5, 7) Magnete (18) angeordnet sind, die insbesondere in Magnetaufnahmebohrungen (19) eingelassen sind.

10. Prüfvorrichtung (1) nach einem der vorhergehenden Ansprüche,
**dadurch gekennzeichnet, dass**
die Kufenkörper (5, 6, 7) aus einem Kunststoffmaterial hergestellt sind, insbesondere unter Einsatz eines Photopolimerisationsverfahrens.

11. Prüfvorrichtung nach einem der vorhergehenden Ansprüche, **dadurch gekennzeichnet, dass**
diese einen Wegaufnehmer aufweist.

12. Prüfvorrichtung nach Anspruch 11,
**dadurch gekennzeichnet, dass**
der Wegaufnehmer (27) ein Magnetrad (28) umfasst, das derart positionierbar ist, dass es auf der Umfangsfläche (4) des zu prüfenden Objekts in Umfangsrichtung (U) abrollt, wobei der Durchmesser und die Befestigung des Magnetrads (28) vorteilhaft derart gewählt sind, dass ein Radialspiel (r) von mindestens 12mm belassen wird.

13. Prüfvorrichtung nach Anspruch 12,
**dadurch gekennzeichnet, dass**
das Magnetrad (28) drehbar an einem axial verschiebbar und in beliebiger Position arretierbar an einer der in Anspruch 2 definierten Führungsstangen (8) befestigten, sich in Umfangsrichtung (U) erstreckenden Haltearm (29) positioniert ist.

14. Prüfvorrichtung nach einem der vorhergehenden Ansprüche, **dadurch gekennzeichnet, dass**
eine Halteeinrichtung (31) vorgesehen ist, die zur Aufnahme eines Fixierelementes zur Fixierung der Prüfvorrichtung in einer Position tangential zum zu prüfenden Objekt ausgelegt ist.

15. Verfahren zur zerstörungsfreien Prüfung von rotationssymmetrischen Objekten, insbesondere von Rotoren (2) von Gas- oder Dampfturbinen unter Verwendung einer Prüfvorrichtung (1) nach einem der vorhergehenden Ansprüche.

## Claims

1. Test apparatus (1) for non-destructive testing of rotationally symmetrical objects,
in particular of rotors (2) of gas or steam turbines,
the rotationally symmetrical objects being rotatable in a peripheral direction (U), and
extending perpendicularly with respect to the peripheral direction (U) in an axial direction (A),
**characterized in that**
this test apparatus has at least three elongate runner bodies (5, 6, 7) which extend in a peripheral direction (U) and parallel to one another, are connected to one another
and define supporting surfaces for setting up on the peripheral surface (4) of the object to be tested,
a testing probe receptacle (20) for an ultrasonic testing probe being provided at least on the middle runner body (6).

2. Test apparatus (1) according to Claim 1,
**characterized in that**
the at least three runner bodies (5, 6, 7) are connected to one another via at least two guide rods (8) which extend parallel to one another in an axial direction and on which the runner bodies (5, 6, 7) are held such that they can be displaced in the axial direction (A) and can be locked at any desired position, the radial spacing (a) between the supporting surfaces (12, 13, 14) of the runner bodies (5, 6, 7) and the guide rods (8) preferably being at least 12 mm, or better still at least 20 mm.

3. Test apparatus (1) according to Claim 2,
**characterized in that**
through holes (9) which receive the guide rods (8) and into which in each case one threaded bore (10) which is accessible from outside for receiving a grub screw (11) opens are configured in the runner bodies (5, 6, 7).

4. Test apparatus (1) according to one of the preceding claims,
**characterized in that**
the supporting surfaces (12, 13, 14) are of ring segment-shaped or prism-like configuration.

5. Test apparatus (1) according to one of the preceding claims,
**characterized in that**
the testing probe receptacle (20) of the middle runner body (6) is provided in the form of a receiving bore (21) which extends radially upwards starting from the supporting surface (13) of the said middle runner body (6) and into which, in particular, a threaded bore (22) which is accessible from outside for receiving a clamping screw opens.

6. Test apparatus (1) according to one of the preceding claims,
**characterized in that**
an outlet opening (23) of a coupling medium feed channel (24) opens into the supporting surface (13) of the middle runner body (6) adjacently with respect to the testing probe receptacle (20),
the inlet opening (25) of the coupling medium feed channel (24) preferably being provided on the upper side of the middle runner body (6) and being configured, in particular, with an internal thread (26).

7. Test apparatus (1) according to one of the preceding claims,
**characterized in that**
at least one of the two outer runner bodies (5, 7) has, in the lower region of its side which points towards the other runner bodies, a recess (15) in the form of a groove which is open on two sides, which recess (15) extends continuously in the peripheral direction (U) and the wall of which, pointing towards the other runner bodies, defines a contact surface (16) for contact with a radially projecting shoulder (17) of the object to be tested.

8. Test apparatus (1) according to one of the preceding claims,
**characterized in that**
at least one of the two outer runner bodies (5, 7) has a further testing probe receptacle (20), in particular in the form of a receiving bore (21) which extends radially upwards starting from the supporting surface (12, 14) thereof and into which a threaded bore (22) which is accessible from the outside for receiving a clamping screw preferably opens.

9. Test apparatus (1) according to one of the preceding claims,
**characterized in that**
magnets (18) which are embedded, in particular, in magnet receptacle bores (19) are arranged on the supporting surface (12, 14) and/or on the contact surface (16) of at least one outer runner body (5, 7).

10. Test apparatus (1) according to one of the preceding claims,
**characterized in that**
the runner bodies (5, 6, 7) are produced from a plastic material, in particular with use of a photopolymerization method.

11. Test apparatus according to one of the preceding claims, **characterized in that**
it has a displacement transducer.

12. Test apparatus according to Claim 11,
**characterized in that**
the displacement transducer (27) comprises a magnet wheel (28) which can be positioned in such a way that it rolls on the peripheral surface (4) of the object to be tested in the peripheral direction (U), the diameter and the fastening of the magnet wheel (28) advantageously being selected in such a way that a radial play (r) of at least 12 mm is retained.

13. Test apparatus according to Claim 12,
**characterized in that**
the magnet wheel (28) is positioned rotatably on a holding arm (29) which extends in the peripheral direction (U) and is fastened to one of the guide rods (8) defined in Claim 2 such that it can be displaced axially and can be locked in any desired position.

14. Test apparatus according to one of the preceding claims, **characterized in that**
a holding device (31) is provided which is designed to receive a fixing element for fixing the test apparatus in a position tangentially with respect to the object to be tested.

15. Method for non-destructive testing of rotationally symmetrical objects, in particular of rotors (2) of gas or steam turbines, with use of a test apparatus (1) according to one of the preceding claims.

## Revendications

1. Installation (1) de contrôle
pour le contrôle sans destruction d'objets de révolution, en particulier de rotors (2) de turbines à gaz ou à vapeur, dans laquelle les objets de révolution peuvent tourner dans une direction (U) de pourtour et
s'étendre dans une direction (A) axiale perpendiculairement à la direction (U) de pourtour,
**caractérisée en ce qu'**
elle a au moins trois patins (5, 6, 7) oblongs, s'étendant dans une direction (U) de pourtour et parallèlement entre eux ainsi que reliés entre eux,
qui définissent des surfaces de portée pour le montage sur la surface (4) de pourtour de l'objet à contrôler,
dans laquelle un logement (20) pour une tête de contrôle par ultrasons est prévue au moins sur le patin (6) médian.

2. Installation (1) de contrôle suivant la revendication 1, **caractérisée en ce que**
les au moins trois patins (5, 6, 7) sont assemblés entre eux par au moins deux barres (8) de guidage s'étendant parallèlement entre elles dans une direction axiale, sur lesquelles les patins (5, 6, 7) sont maintenus avec possibilité de coulisser dans une direction (A) axiale et d'être arrêtés en n'importe quelle position,
dans laquelle la distance (a) radiale entre les surfaces (12, 13, 14) de portée des patins (5, 6, 7) et les barres (8) de guidage est, de préférence d'au moins 12 mm, mieux encore d'au moins 20 mm.

3. Installation (1) de contrôle suivant la revendication 2, **caractérisée en ce que**,
dans les patins (5, 6, 7), sont constitués des trous (9) traversant, qui reçoivent les barres (8) de guidage et dans lesquels débouche respectivement un taraudage (10) accessible de l'extérieur de réception d'un goujon (11) fileté.

4. Installation (1) de contrôle suivant l'une des revendications précédentes,
**caractérisée en ce que**
les surfaces (12, 13, 14) de portée sont en forme de segment annulaire ou de type prismatique.

5. Installation (1) de contrôle suivant l'une des revendications précédentes,
**caractérisée en ce que**
le logement (20) de la tête de contrôle du patin (6) médian est prévu sous la forme d'un trou (21) de réception s'étendant vers l'avant radialement à partir de sa surface (13) de portée, trou dans lequel débouche, pour la réception d'une vis de serrage, en particulier un taraudage (22) accessible de l'extérieur.

6. Installation (1) de contrôle suivant l'une des revendications précédentes,
**caractérisée en ce que**,
dans la surface (13) de portée du patin (6) médian, débouche, au voisinage du logement (20) de tête de contrôle, une ouverture (23) de sortie d'un conduit (24) d'apport d'un agent de couplage,
dans laquelle l'ouverture (25) d'entrée du conduit (24) d'agent de couplage est prévue, de préférence du côté supérieur du patin (6) médian et est constituée, en particulier, en ayant un taraudage (26).

7. Installation (1) de contrôle suivant l'une des revendications précédentes,
**caractérisée en ce qu'**
au moins l'un de deux patins (5, 7) extérieurs a, dans la partie inférieure de son côté tourné vers les autres patins, un évidement (15) s'étendant de manière continue dans la direction (U) du pourtour, sous la forme d'une rainure ouverte de deux côtés, dont la paroi tournée vers les autres patins définit une surface (16) de contact pour l'application à un ressaut (17) en saillie radialement de l'objet à contrôler.

8. Installation (1) de contrôle suivant l'une des revendications précédentes,
**caractérisée en ce qu'**
au moins l'un des deux patins (5, 7) extérieurs a un autre logement (20) de tête de contrôle, en particulier sous la forme d'un trou (21) de réception s'étendant radialement vers l'avant à partir de sa surface (12, 14) de portée, trou dans lequel débouche, de préférence, un taraudage (22) accessible de l'extérieur de réception d'une vis de serrage.

9. Installation (1) de contrôle suivant l'une des revendications précédentes,
**caractérisée en ce que**,
sur la surface (12, 14) de portée et/ou sur la surface (16) de contact d'au moins un patin (5, 7) extérieur sont disposés des aimants (18), qui sont insérés, en particulier, dans des trous (19) de logement d'aimant.

10. Installation (1) de contrôle suivant l'une des revendications précédentes,
**caractérisée en ce que**
les patins (5, 6, 7) sont fabriqués en une matière plastique, en particulier en utilisant un procédé de photopolymérisation.

11. Installation de contrôle suivant l'une des revendications précédentes,
**caractérisée en ce que**
celle-ci a un capteur de course.

12. Installation de contrôle suivant la revendication 11, **caractérisée en ce que**
le capteur (27) de course comprend une roue (28) magnétique, qui peut être mise en position de manière à rouler dans la direction (U) de pourtour sur la surface (4) de portée de l'objet à contrôler, dans laquelle le diamètre et la fixation de la roue (28) magnétique sont choisis avantageusement, de manière à laisser un jeu (r) radial d'au moins 12 mm.

13. Installation de contrôle suivant la revendication 12, **caractérisée en ce que**
la roue (28) magnétique peut être mise en position avec possibilité de tourner sur un bras (29) de maintien, s'étendant dans la direction (U) du pourtour, fixé, avec possibilité de coulisser axialement et d'être arrêté en n'importe quelle position, sur l'une des barres (8) de guidage définies à la revendication 2.

14. Installation de contrôle suivant l'une des revendications précédentes,
**caractérisée en ce qu'**
il est prévu un dispositif (31) d'arrêt, qui est conçu pour la réception d'un élément de fixation de l'installation de contrôle dans une position tangentiellement à l'objet à contrôler.

15. Procédé de contrôle sans destruction d'objets de révolution, en particulier de rotors (2) de turbines à gaz ou à vapeur, en utilisant une installation (1) de contrôle suivant l'une des revendications précédentes.
